# EUROPÄISCHE PATENTSCHRIFT

(11) **EP 0 943 504 B1**
(45) Veröffentlichungstag und Bekanntmachung des Hinweises auf die Patenterteilung: **24.07.2002**
(21) Anmeldenummer: 99104270.6
(22) Anmeldetag: 03.03.1999
(51) Int. Cl.: B60R 21/32, B60R 21/00

(54) **Ansteuerung eines Airbags mit Betätigungsschalter zur Aktivierung bzw. Deaktivierung des Airbags**
Airbag control with an actuating switch for activating or deactivating the airbag
Commande d'airbag muni d'un commutateur d'activation ou de désactivation de l'airbag

(30) Priorität: 14.03.1998 DE 19811182
(43) Veröffentlichungstag der Anmeldung: 22.09.1999
(73) Patentinhaber: Volkswagen Aktiengesellschaft, 38436 Wolfsburg (DE)
(72) Erfinder: Lehnst, Thomas, Dipl.-Ing., 38104 Braunschweig (DE)

(56) Entgegenhaltungen:
- EP-A- 0 719 681
- US-A- 5 324 074

## Beschreibung

Die Erfindung betrifft eine Vorrichtung zur Ansteuerung eines Airbags, umfassend ein Airbagsteuergerät, einen Betätigungsschalter zur Aktivierung bzw. Deaktivierung des Airbags sowie eine optische Anzeigevorrichtung.

Kraftfahrzeuge sind zunehmend mit Airbags ausgestattet, die sich im Falle der Kollision ausdehnen, um den Fahrer oder Beifahrer vor einem Aufprall mit harten Teilen der Konstruktion zu schützen. Der Airbag soll jedoch auch abschaltbar sein. Zum einen, damit dieser nicht bei nichtbesetztem Beifahrersitz ausgelöst wird und zum anderen, um in bestimmten Situationen nicht den Fahrer oder Beifahrer zu verletzen, beispielsweise wenn ein Kindersitz auf dem Beifahrersitz angeordnet ist.

Dazu wird zwischen einem Airbagsteuergerät und dem Airbag ein mechanischer Schalter angeordnet, mittels dessen das Airbagsteuergerät vom Airbag galvanisch getrennt werden kann. Ein solcher Schalter gemäss dem Oberbegriff des Anspruchs 1 ist beispielsweise aus der DE 195 41 122 oder EP 0 719 681 bekannt. Gleichzeitig mit der galvanischen Trennung wird eine optische Anzeigeeinrichtung, die beispielsweise als LED ausgebildet ist, angesteuert, so daß optisch die Deaktivierung des Airbags signalisiert wird. Die galvanische Trennung bei Betätigung des Schalters führt an den Klemmen des Airbagsteuergerätes zu einem Leerlauf, der zu Fehlfunktionen führen könnte, da das Airbagsteuergerät nicht zwischen einem Leerlauf aufgrund eines Schaltungsvorganges oder einer Leitungsunterbrechung unterscheiden kann. Daher wird parallel zum Airbag hinter dem Betätigungsschalter ein Sicherungswiderstand angeordnet. Der Sicherungswiderstand weist dabei den gleichen ohmschen Widerstand auf wie der Zündpillenwiderstand des Airbags. Mittels des Betätigungsschalters wird dann wahlweise der elektrische Schaltkreis entweder über dem Airbag oder über den Sicherungswiderstand geschlossen, so daß das Airbagsteuergerät stets mit der gleichen Last abgeschlossen wird. Des weiteren sind Airbagsteuergeräte bekannt, die permanent mit dem Airbag galvanisch verbunden sind. Dem Airbagsteuergerät ist direkt die optische Anzeigeeinrichtung zugeordnet. Das Airbagsteuergerät ist über zwei in Serie geschaltete ohmsche Widerstände mit einer Betriebsspannungsquelle verbunden. Parallel zu einem der Widerstände ist der Betätigungsschalter angeordnet, so daß dieser bei geschlossenem Schalter kurzgeschlossen wird. Dies registriert das Airbagsteuergerät über die daraus resultierende Stromänderung und schaltet die optische Anzeigeeinrichtung ein. Ein Defekt der optischen Anzeigevorrichtung ist ebenfalls über eine Stromänderung durch das Airbagsteuergerät erfaßbar. Trotz unveränderter galvanischer Verbindung erzeugt dann das Airbagsteuergerät kein Zündsignal für den Airbag. Dieses sehr fortschrittliche Konzept benötigt jedoch ein völlig neu konzipiertes Airbagsteuergerät, so daß erhebliche Nachrüstungen notwendig wären, um in älteren Kraftfahrzeugen den gleichen Sicherheitsstandard zu schaffen.

Der Erfindung liegt daher das technische Problem zugrunde, eine Vorrichtung zur Ansteuerung eines Airbags zu schaffen, das den gleichen Sicherheitsstandard bietet, jedoch auf herkömmliche Airbagsteuergeräte aufsetzbar ist.

Die Lösung des technischen Problems ergibt sich durch die Merkmale der Patentansprüche 1 und 2. Dabei übernimmt in beiden Varianten die Zwischenelektronik die Funktion, das Airbagsteuergerät stets mit dem gleichen Widerstand abzuschließen. In der Ausführungsform gemäß dem Gegenstand des Patentanspruchs 1 ist die Zwischenelektronik zwischen dem Airbagsteuergerät und dem Airbag angeordnet, so daß die Zwischenelektronik die elektrische Auslösung des Airbags ausführt, d.h. ein Zündimpuls des Airbagsteuergerätes wird von der Zwischenelektronik im Bedarfsfall in ein Zünderimpuls umgesetzt bzw. bei deaktiviertem Airbag unterdrückt. Da die optische Anzeigeeinrichtung und der Betätigungsschalter direkt der Zwischenelektronik zugeordnet sind, erfaßt die Zwischenelektronik einen Defekt unmittelbar, beispielsweise aufgrund einer Änderung eines Prüfstromes. Dieser Defekt kann dann dem Airbagsteuergerät übermittelt werden, der dies dann auf einer Anzeigeeinrichtung dem Kraftfahrzeugführer oder dem Beifahrer mitteilen kann.

Bei der parallelen Anordnung der Zwischenelektronik erzeugt wie im Stand der Technik das Airbagsteuergerät den Zündimpuls, der über den Betätigungsschalter dem Airbag zugeführt wird. Die optische Anzeigeeinrichtung ist wie in der Ausführungsform gemäß Patentanspruch 1 der Zwischenelektronik zugeordnet und von dieser hinsichtlich Funktionalität überprüfbar, wohingegen der Betätigungsschalter mittels einer Fehler- und einer Meßleitung abgefragt wird. Dadurch wird sichergestellt, daß ein Defekt der optischen Anzeigevorrichtung zuverlässig erkannt wird. Ein weiterer Vorteil der Ausführungsform gemäß Patentanspruch 2 ist, daß ein Defekt der Zwischenelektronik keine unmittelbaren Auswirkungen auf den Airbag hat und dieser voll einsatzbereit bleibt. Weitere vorteilhafte Ausgestaltungen der Erfindung ergeben sich aus den Unteransprüchen.

Durch die Zuordnung von Identifikationswiderständen für die optischen Anzeigeeinrichtungen und/oder die Betätigungsschalter sind die einzelnen Komponenten für Fahrer bzw. Beifahrer für die Zwischenelektronik identifizierbar, so daß ein mögliches Vertauschen beim Einbau für die Zwischenelektronik erkennbar ist und über das Airbagsteuergerät anzeigbar ist. Vorzugsweise werden der Identifikationswiderstand und dessen zugehörige Komponente als eine Baueinheit ausgebildet, so daß ein Vertauschen der Identifikationswiderstände beim Einbau vermieden wird.

Die Erfindung wird nachfolgend anhand eines bevorzugten Ausführungsbeispiels näher erläutert. Die Figuren zeigen:

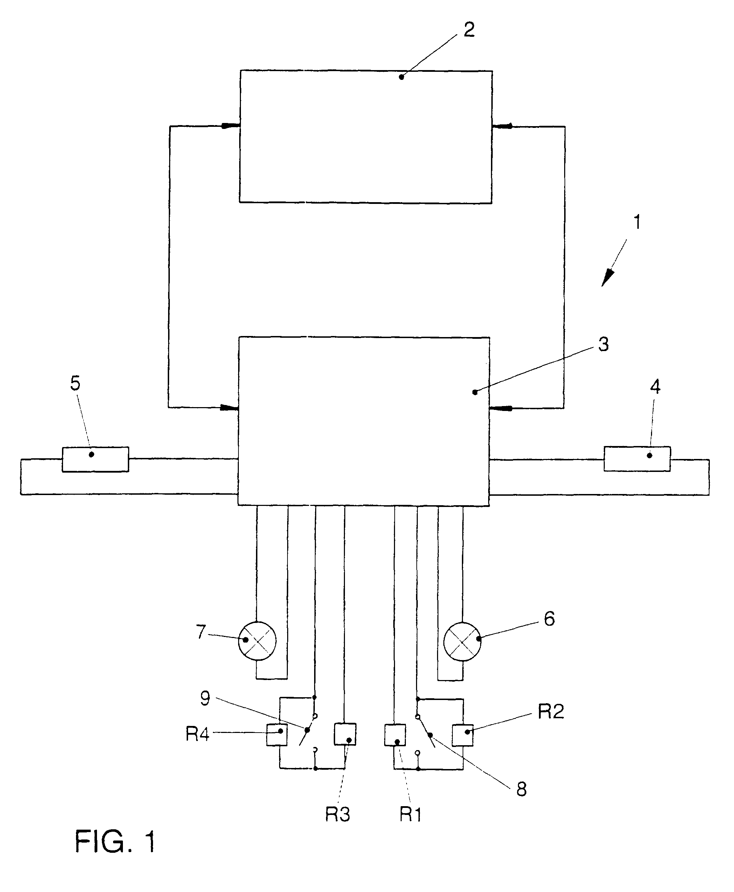

- Fig. 1: in Blockschaltbild einer Vorrichtung zur Ansteuerung eines Airbag mit einer Zwischenelektronik und
- Fig. 2: in Blockschaltbild einer Vorrichtung mit Fehler- und Meßleitung.

Die Vorrichtung 1 zur Ansteuerung eines Airbags umfaßt ein Airbagsteuergerät 2, eine Zwischenelektronik 3, einen Fahrerairbag 4, einen Beifahrerairbag 5, zwei optische Anzeigeeinrichtungen 6, 7, zwei Betätigungsschalter 8, 9 und den Betätigungsschaltem 8, 9 zugeordnete Identifikationswiderstände R1 - R4. Die Zwischenelektronik 3 ist zwischen dem Airbagsteuergerät 2 und den beiden Airbags 4, 5 angeordnet, wobei die Zwischenelektronik 3 bidirektional mit dem Airbagsteuergerät 2 verbunden ist. Des weiteren ist die Zwischenelektronik 3 über jeweils separate Schaltkreise mit den beiden Airbags 4, 5 verbunden. Ebenso sind die optischen Anzeigeeinrichtungen 6, 7 und die Betätigungsschalter 8, 9 in separaten Schaltkreisen mit der Zwischenelektronik 3 verbunden, wobei die optische Anzeigeeinrichtung 6 und der Betätigungsschalter 8 dem Fahrerairbag 4 und die optische Anzeigeeinrichtung 7 und der Betätigungsschalter 9 dem Beifahrerairbag zugeordnet sind. Dadurch sind über die Zwischenelektronik 3 das Airbagsteuergerät 2 und alle übrigen Komponenten voneinander entkoppelt.

Die Zwischenelektronik 3 übernimmt dabei mehrere Funktionen. Zum einen wird über die Zwischenelektronik 3 das Airbagsteuergerät 2 mit einem Widerstand gleich dem Zündpillenwiderstand der Airbags 4, 5 abgeschlossen. Zum anderen übernimmt die Zwischenelektronik 3 das Zünden des Airbags 4, 5 und die Überwachung der optischen Anzeigeeinrichtungen 6, 7 und der Betätigungsschalter 8, 9. Das Funktionsprinzip wird nachfolgend für den Fahrerairbag 4 näher erläutert, wobei alle Überlegungen sinngemäß auch auf den Beifahrerairbag 5 gelten.

Zur Aktivierung des Fahrerairbags 4 bleibt der Betätigungsschalter 8 offen. Die Schalterstellung wird dabei von der Zwischenelektronik 3 abgefragt, indem der Strom des Schaltkreises ausgewertet wird. Bei offenem Betätigungsschalter 8 fließt der Strom über die Reihenschaltung von R1 und R2, wohingegen bei geschlossenem Betätigungsschalter 8 der Widerstand R2 kurzgeschlossen wird. Erfaßt nun das Airbagsteuergerät 2 eine Verzögerung, bei der der Airbag 4 ausgelöst werden soll, so erzeugt das Airbagsteuergerät 3 einen Zündimpuls. Dieser Zündimpuls wird von der Zwischenelektronik 3 erfaßt, die dann diesen entweder direkt an den Airbag 4 weiterleitet oder einen entsprechenden Zündimpuls generiert. Zur Deaktivierung des Airbags 4 wird manuell der Betätigungsschalter 8 geschlossen, was von der Zwischenelektronik 3 durch die Widerstandsänderung registriert wird. Die Zwischenelektronik 3 schaltet darauf die optische Anzeigeeinrichtung 6, die beispielsweise als Glühleuchte ausgebildet ist, an. Die Funktion der optischen Anzeigeeinrichtung 6 wird ebenfalls von der Zwischenelektronik 3 überprüft. Erfaßt nun das Airbagsteuergerät 2 oder ein zugeordneter Beschleunigungssensor eine Verzögerung bei normalerweise der Airbag 4 ausgelöst werden soll, so generiert das Airbagsteuergerät 2 einen Zündimpuls. Dieser Zündimpuls wird jedoch von der Zwischenelektronik 3 ignoriert bzw. führt zu keiner Generierung eines Zündimpulses in der Zwischenelektronik 3. Darüber hinaus kann der optischen Anzeigeeinrichtung 6 ein Identifikationswiderstand zugeordnet werden. Alle Identifikationswiderstände weisen einen anderen ohmschen Widerstand auf so, daß jeweils eindeutig auf die zugehörige Komponente zurückgeschlossen werden kann; Des weiteren meldet die Zwischenelektronik 3 erfaßte Fehler an das Airbagsteuergerät 2 weiter. Dazu wird beispielsweise ein hochohmiger Leckwiderstand aufgeschaltet, was das Airbagsteuergerät registriert und als Fehlfunktion des Airbags wertet.

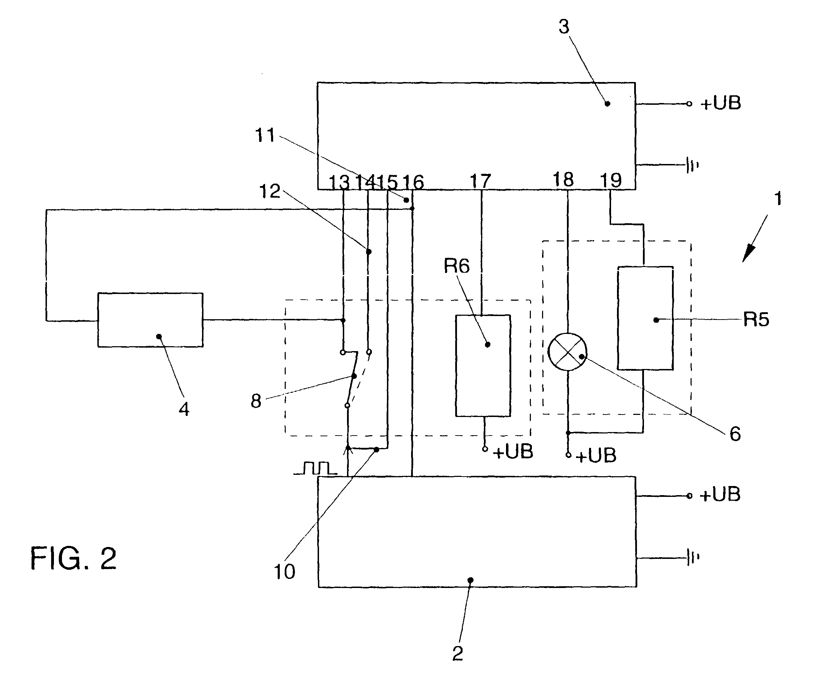

In der Fig. 2 ist eine alternative Ausführungsform dargestellt, wobei der Übersicht halber nur der Fahrerairbag 4 mit seinen Komponenten dargestellt ist. Das Airbagsteuergerät 2 ist über den Betatigungsschalter 8 mit dem Airbag 4 verbindbar, so daß der Stromkreis zurück zum Airbagsteuergerät 2 geschlossen ist. Hinter dem Betätigungsschalter 8 ist eine elektrische Zuleitung angeordnet, die auf einen Eingang 13 der Zwischenelektronik geschaltet ist. Die dem Eingang 13 nachgeordnete Elektronik hat dabei zwei Funktionen. Zum einen wird der Betätigungsschalter 8 bei geschlossenem Schalter auf Funktionalität überprüft und andererseits wird bei offenem Schalter 8 der deaktivierte Airbag 4 niederohmig abgeschlossen. Des weiteren ist vor dem Betätigungsschalter 8 eine Fehlerleitung 10 angeordnet, die mit einem Eingang 15 der Zwischenelektronik 3 verbunden ist und über die Zwischenelektronik 3 die vom Airbagsteuergerät 2 kommenden Prüfimpulse abfragt. Des weiteren ist hinter dem Schalter 8 eine Meßleitung 11 angeordnet, die mit einem Eingang 16 der Zwischenelektronik 3 verbunden ist, wobei die Meßleitung 11 sowohl vor als auch hinter dem Airbag 4 angeordnet sein kann. Der dem Eingang 16 zugeordnete Elektronikteil schließt einerseits den deaktivierten Airbag niederohmig ab. Zum anderen kann bei einer erkannten Fehlfunktion ein hochohmiger Leckwiderstand zugeschaltet werden, so daß das Airbagsteuergerät 2 aufgrund des Widerstandes ungleich dem Zündpillenwiderstand des Airbags 4 dies als Störung registriert. Zur Aktivierung des Airbags 4 wird der Schalter 8 geschlossen. Mittels vom Airbagsteuergerät 2 generierter Prüfimpulse kann dann die Schalterstellung abgefragt werden. Liegen die Prüfimpulse sowohl auf der Fehlerleitung 10 als auch auf der Meßleitung 11, ist der Schalter 8 geschlossen. Liegen die Prüfimpulse nur auf der Fehlerleitung 10 und der Leitung 12, ist der Schalter 8 offen. Bei anderen Kombinationen kann auf einen Defekt der Vorrichtung 1 geschlossen werden. Ist der Schalter 8 geschlossen und erfaßt das Airbagsteuergerät 2 eine Verzögerung, bei der der Airbag 4 ausgelöst werden soll, so generiert das Airbagsteuergerät 2 einen Zündimpuls, der über den Schalter 8 dem Airbag 4 zugeführt wird. Ist der Schalter 8 offen, d.h. der Airbag 4 deaktiviert, so simuliert die Zwischenelektronik 3 hinter dem Eingang 14 dem Airbagsteuergerät 2 den Zündpillenwiderstand. Weiter ist dem Schalter 8 ein Identifikationswiderstand R6 zugeordnet, der vorzugsweise mit dem Schalter 8 eine Baueinheit bildet. Der Identifikationswiderstand R6 ist mit einem Eingang 17 der Zwischenelektronik 3 verbunden und von dieser überprüft.

## Patentansprüche

1. Vorrichtung zur Ansteuerung mindestens eines Airbags, umfassend ein Airbagsteuergerät, mindestens ein Betätigungsschalter zur Aktivierung bzw. Deaktivierung des Airbags sowie eine optische Anzeigevorrichtung,
**dadurch gekennzeichnet, daß**
zwischen dem Airbagsteuergerät (2) und dem Airbag (4,5) eine Zwischenelektronik (3) angeordnet ist, der der Betätigungsschalter (8,9) und die optische Anzeigeeinrichtung (6,7) zugeordnet und von dieser auf Funktionalität überprüfbar sind, wobei die Zwischenelektronik (3) das Airbagsteuergerät (2) mit einem Eingangswiderstand, der gleich dem Zündpillenwiderstand des Airbags (4, 5) ist, belastet und den Betätigungsschaltern (8,9) und/oder den optischen Anzeigeeinrichtungen (6,7) jeweils mindestens ein Identifikationswiderstand (R1-R6) zugeordnet ist.

2. Vorrichtung zur Ansteuerung mindestens eines Airbags, umfassend ein Airbagsteuergerät, mindestens ein Betätigungsschalter zur Aktivierung bzw. Deaktivierung des Airbags sowie eine optische Anzeigeeinrichtung,
**dadurch gekennzeichnet, daß**
parallel zu dem Airbagsteuergerät (2) eine Zwischenelektronik (3) angeordnet ist, der die optische Anzeigevorrichtung (6,7) zugeordnet ist, wobei das Airbagsteuergerät (2) über eine Fehlerleitung (10) vor dem Betätigungsschalter (8, 9) mit der Zwischenelektronik (3) und die Zwischenelektronik (3) über eine Meßleitung (11) hinter dem Betätigungsschalter (8,9) mit dem Airbag verbunden ist, wobei die Zwischenelektronik (3) bei deaktiviertem Airbag (4, 5) das Airbagsteuergerät (2) mit einem Eingangswiderstand, der gleich dem Zündpillenwiderstand des Airbags ist, belastet und den Betätigungsschaltern (8,9) und/oder den optischen Anzeigeeinrichtungen (6,7) jeweils mindestens ein Identifikationswiderstand (R1-R6) zugeordnet ist.

3. Vorrichtung nach Anspruch 1 oder 2, **dadurch gekennzeichnet, daß** der Betätigungsschalter (8,9) und/oder die optische Anzeigeeinrichtung (6,7) mit ihrem zugeordneten Identifikationswiderstand (R1-R6) eine Baueinheit bildet.

4. Vorrichtung nach einer der vorangegangenen Ansprüche, **dadurch gekennzeichnet, daß** alle Identifikationswiderstände (R1-R6) einen anderen ohmschen Widerstand aufweisen.

## Claims

1. Device for actuating at least one airbag, comprising an airbag control unit, at least one activation switch for activating or deactivating the airbag and a visual display device, **characterized in that** an intermediate electronics unit (3), to which the actuation switch (8, 9) and the visual display device (6, 7) are assigned and by which their operation or capability can be checked, is arranged between the airbag control unit (2) and the airbag (4, 5), the intermediate electronic unit (3) loading the airbag control unit (2) with an input resistance which is equal to the firing cap resistance of the airbag (4, 5) and at least one identification resistor (R1-R6) being assigned to each of the activation switches (8, 9) and/or visual display devices (6, 7).

2. Device for actuating at least one airbag, comprising an airbag control unit, at least one activation switch for activating or deactivating the airbag and a visual display device, **characterized in that** an intermediate electronic unit (3) to which the visual display device (6, 7) is assigned is arranged in parallel with the airbag control unit (2), the airbag control unit (2) being connected to the intermediate electronic unit (3) via a fault line (10) upstream of the activation switch (8, 9), and the intermediate electronic unit (3) being connected to the airbag via a measuring line (11) downstream of the actuation switch (8, 9), in which case, when the airbag (4, 5) is deactivated, the intermediate electronic unit (3) loads the airbag control unit (2) with an input resistance which is equal to the firing cap resistance of the airbag and at least one identification resistor (R1-R6) is assigned to each of the activation switches (8, 9) and/or the visual display devices (6, 7).

3. Device according to Claim 1 or 2, **characterized in that** the activation switch (8, 9) and/or the visual display device (6, 7) with their assigned identification resistor (R1-R6) forms one physical unit.

4. Device according to one of the preceding claims, **characterized in that** all of the identification resistors (R1-R6) have a different ohmic impedance.

## Revendications

1. Dispositif de commande d'au moins un airbag, comprenant un appareil de commande d'airbag, au moins un commutateur d'activation ou de désactivation de l'airbag ainsi qu'un dispositif de signalisation visuelle, **caractérisé en ce qu'**un circuit électronique intermédiaire (3) est branché entre l'appareil de commande d'airbag (2) et l'airbag (4, 5), lequel est associé au commutateur d'actionnement (8, 9) et au dispositif de signalisation visuelle (6, 7) et qui peut tester leur fonctionnalité, le circuit électronique intermédiaire (3) chargeant l'appareil de commande d'airbag (2) avec une résistance d'entrée qui est égale à la résistance de l'amorce de l'airbag (4, 5) et au moins une résistance d'identification (R1 - R6) étant à chaque fois associée avec les commutateurs d'actionnement (8, 9) et/ou les dispositifs de signalisation visuelle (6, 7).

2. Dispositif de commande d'au moins un airbag, comprenant un appareil de commande d'airbag, au moins un commutateur d'activation ou de désactivation de l'airbag ainsi qu'un dispositif de signalisation visuelle, **caractérisé en ce qu'**un circuit électronique intermédiaire (3) est branché en parallèle avec l'appareil de commande d'airbag (2), lequel est associé au dispositif de signalisation visuelle (6, 7), l'appareil de commande d'airbag (2) étant relié au circuit électronique intermédiaire (3) par le biais d'une ligne de défaut (10) avant le commutateur d'actionnement (8, 9) et le circuit électronique intermédiaire (3) étant relié à l'airbag par le biais d'une ligne de mesure (11) après le commutateur d'actionnement (8, 9), le circuit électronique intermédiaire (3) chargeant l'appareil de commande d'airbag (2) avec une résistance d'entrée qui est égale à la résistance de l'amorce de l'airbag lorsque l'airbag (4, 5) est désactivé et au moins une résistance d'identification (R1 - R6) étant à chaque fois associée avec les commutateurs d'actionnement (8, 9) et/ou les dispositifs de signalisation visuelle (6, 7).

3. Dispositif selon la revendication 1 ou 2, **caractérisé en ce que** le commutateur d'actionnement (8, 9) et/ou le dispositif de signalisation visuelle (6, 7) forment avec leur résistance d'identification associée (R1 - R6) un module fonctionnel.

4. Dispositif selon l'une des revendications précédentes, **caractérisé en ce que** toutes les résistances d'identification (R1 - R6) présentent une résistance ohmique différente.
